# EUROPÄISCHE PATENTSCHRIFT

(11) **EP 2 412 502 B1**
(45) Veröffentlichungstag und Bekanntmachung des Hinweises auf die Patenterteilung: **20.11.2013**
(21) Anmeldenummer: 11173176.6
(22) Anmeldetag: 08.07.2011
(51) Int. Cl.: B27G 19/04, B23D 45/16, B23D 59/00

(54) **Kreissäge**
Circular saw
Scie circulaire

(30) Priorität: 30.07.2010 DE 102010038676
(43) Veröffentlichungstag der Anmeldung: 01.02.2012
(73) Patentinhaber: HILTI Aktiengesellschaft, 9494 Schaan (LI)
(72) Erfinder: Haas, Günter, 86916 Kaufering (DE)

(56) Entgegenhaltungen:
- EP-A1- 0 407 339
- CA-A1- 1 266 601
- DE-C2- 3 540 625
- JP-U- H0 311 518
- US-A- 5 327 649
- US-A- 5 537 748
- US-A- 5 911 482
- US-A1- 2004 134 076

## Beschreibung

Die Erfindung betrifft eine Kreissäge gemäß dem Oberbegriff des Patentanspruchs 1, insbesondere eine Handkreissäge, mit einer Werkstückauflagefläche, einem Sägeblatt und einer Schutzabdeckung, die das Sägeblatt in einem Bereich oberhalb eines zu bearbeitenden Werkstücks abdeckt.

Die Spanführung ist bei Handkreissägen, dabei vor allem bei Metallsägen, extrem wichtig, damit die heißen, umherfliegenden Späne nicht zum Benutzer fliegen können. Aus diesem Grund sind bogenförmige Schutzabdeckungen um die obere Hälfte des Sägeblatts gezogen. Diese Schutzabdeckungen schließen mit der sogenannten Auflageplatte ab. Die Unterseite der ebenen Auflageplatte bildet die Werkstückauflagefläche, mit der die Kreissäge an der Werkstückoberfläche entlang gleitet.

Gerade bei Metall-Kreissägen besteht das Problem, dass die oft transparenten oder zum Teil transparenten Schutzabdeckungen matt werden, wenn die heißen Metallspäne auf sie auftreffen.

Aus DE 35 40 625 C ist eine Kreissäge gemäß dem Oberbegriff des Anspruchs 1, mit einer Auflageplatte, einem Sägeblatt und einer Schutzabdeckung, die das Sägeblatt in einem Bereich oberhalb eines zu bearbeitenden Werkstücks abdeckt, bekannt. Die Schutzabdeckung weist eine solche Geometrie und Lage zum Sägeblatt auf, dass eine Gerade, die durch die erste Reflexion einer am Schnittpunkt des Sägeblattumfangs mit der Werkstückauflagefläche angesetzten Tangente von der Schutzabdeckung entsteht, mit einer Senkrechten zur Werkstückauflagefläche einen Winkel von bis zu 30° einschließt. Aufgabe der Erfindung ist es, in der Kreissäge einen verbesserten Spanabtransport zu erlauben.

Dies wird bei einer Kreissäge der eingangs genannten Art dadurch erreicht, dass die Innenseite der Schutzabdeckung im Bereich der Auflageplatte einen geringsten Abstand von maximal 10 mm zum Umfang des Sägeblatts hat und zusätzlich die Tangente in einem Abstand von maximal 20 mm zum Werkstück auf die Schutzabdeckung auftrifft.

Der Span fliegt von dem Schnittpunkt des Sägeblattumfangs mit der Werkstückauflagefläche linear weg und beschreibt eine gerade Flugbahn, die durch die Tangente an den Sägeblattumfang bestimmt ist. Der Span trifft auf die Schutzabdeckung und wird von dieser abprallen, das heißt reflektiert, wobei der Auftreffwinkel gleich dem Reflexionswinkel ist. Die Flugbahn des abgeprallten Spans nach seiner ersten Reflexion, das heißt nach dem ersten Auftreffen auf die Schutzabdeckung, wird ebenfalls eine Gerade beschreiben. Diese Gerade verläuft jedoch nicht, wie im Stand der Technik, in Richtung Arm des Bearbeiters, sondern im Wesentlichen senkrecht zur Werkstückauflagefläche, das heißt in einem Winkelbereich von ± 30° zur Senkrechten. Ist die Werkstückauflagefläche horizontal ausgerichtet, so fliegen die Späne im Wesentlichen vertikal. Dies hat einerseits einen verbesserten Schutz zur Folge, und andererseits wird die Schutzabdeckung innenseitig weniger stark beansprucht, denn der Auftreffwinkel des Spans auf die Innenseite der Schutzabdeckung ist sehr flach verglichen mit dem Stand der Technik. Um diese flachen Aufprallwinkel zu erzielen, ist die Schutzabdeckung verglichen mit dem Stand der Technik sehr nahe an das Sägeblatt herangezogen. Dieser geringe Abstand zwischen der Innenseite der Schutzabdeckung und dem Sägeblatt sorgt dafür, dass die Geschwindigkeit des Spans sehr schnell reduziert wird, da er frühzeitig auf die Schutzabdeckung prallt.

Die oben genannte Lösung wird auch dadurch verbessert, dass die Schutzabdeckung axial gegenüberliegende Seitenwände aufweist, die das Sägeblatt in axialer Richtung teilweise abdecken, und dass von der Innenseite der Seitenwände radial einwärts des Sägeblattumfangs, axial aufeinander zu und vorzugsweise konzentrisch zum Sägeblatt verlaufende Leisten vorstehen. Diese Leisten oder bogenförmigen Fortsätze, die sich zur Seitenfläche des Sägeblatts hin erstrecken, ohne sie zu kontaktieren, schirmen den verzahnten Umfang des Sägeblatts radial nach innen etwas ab, sodass sich eine Art Späne aufnehmende Kammer ergibt. Hierdurch soll vermieden werden, dass Späne in Richtung Drehzentrum die Schutzabdeckung verlassen können.

Die Schutzabdeckung sollte einen, das heißt zumindest einen Sichtbereich haben, der eine Sicht zur Schnittstelle freigibt. Dieser Sichtbereich grenzt vorzugsweise an die Werkstückauflagefläche an.

Um den Sichtbereich, welcher insbesondere durch einen transparenten Kunststoff gebildet wird, nicht aufgrund der heißen Späne matt werden zu lassen, ist erfindungsgemäß auf der radialen Innenseite der Schutzabdeckung eine separate Prallplatte vorgesehen. An dieser Prallplatte haben die Metallspäne somit ihren ersten Kontakt.

Gemäß der bevorzugten Ausführungsform ist die Prallplatte aus Metall.

Im Bereich der oder um die Prallplatte herum sollte die Schutzabdeckung aus transparentem Kunststoff bestehen, sodass die Sicht zur Schnittstelle ausschließlich durch die Metallplatte behindert wird, was jedoch insgesamt nicht störend ist, zumal der Kunststoff um die Prallplatte herum nicht matt wird.

Zur optimalen Fixierung der Prallplatte ist diese innenseitig am Rest der Schutzabdeckung befestigt, das heißt, die Schutzabdeckung ist im Bereich der Prallplatte wenigstens zweilagig, in Radialrichtung gesehen. Die Prallplatte kann auch austauschbar am Rest der Schutzabdeckung befestigt sein, was insbesondere bei Metall-Kreissägen vorteilhaft ist.

Gemäß der bevorzugten Ausführungsform hat die Schutzabdeckung einen Hauptabschnitt. Dieser Hauptabschnitt dient zur werkzeugseitigen Befestigung der Schutzabdeckung und ist vorzugsweise aus nicht transparentem Material. Der Hauptabschnitt wird im Normalfall auch den größten Teil der Schutzabdeckung bilden und dient sozusagen auch als Trägerteil.

Der Hauptabschnitt kann dabei aus einem anderen Material als die Prallfläche und der Sichtbereich sein, vorzugsweise aus einem nicht transparenten Kunststoff.

Zu betonen ist, dass der Sichtbereich unter Umständen als offenes Sichtfenster ausgeführt oder eine Kombination aus einem offenen Sichtfenster mit einer transparenten Abdeckung sein kann.

Darüber hinaus ist auch eine Ausführungsform denkbar, bei der Sichtbereich, Prallfläche und Hauptabschnitt aus transparentem Kunststoff bestehen.

Neben der Prallfläche mit der Prallplatte, die für die erste Reflexion der Späne vorgesehen ist, können auch noch weitere Prallplatten innenseitig an der Schutzabdeckung vorgesehen sein, um weitere stark beanspruchte Bereiche der Schutzabdeckung zu schonen. Dies ist insbesondere bei einer Kunststoffausführung der Schutzabdeckung vorteilhaft.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Seitenansicht einer erfindungsgemäßen Handkreissäge;
- Figur 2 eine vertikale Schnittansicht durch die Schutzabdeckung der Handkreissäge aus Figur 1;
- Figur 3 eine horizontale Schnittansicht durch die Schutzabdeckung der Handkreissäge aus Figur 1; und
- Figur 4 eine perspektivische Ansicht der Schnittansicht in Figur 3.

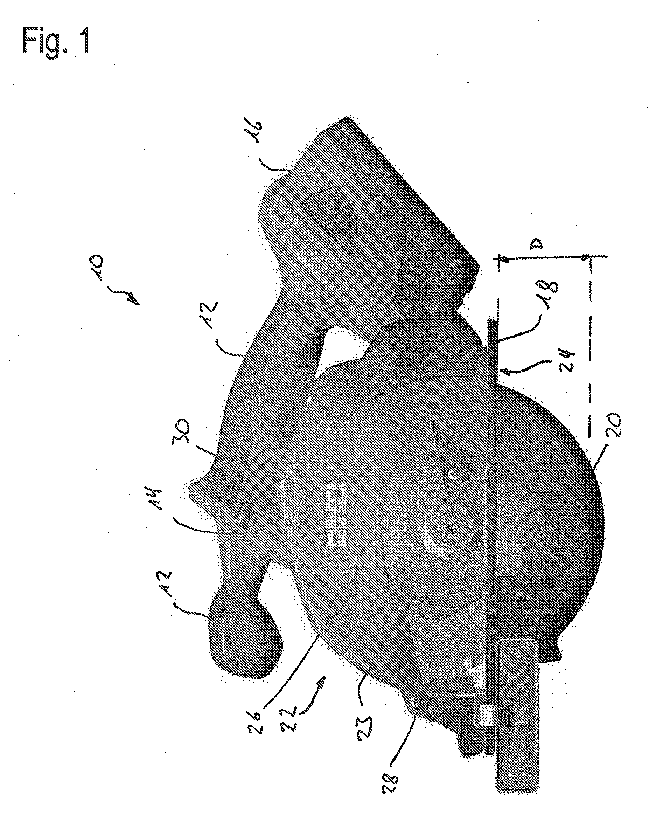

Figur 1 zeigt eine elektrische Handkreissäge 10. Der Aufbau der Handkreissäge 10 entspricht im Wesentlichen dem einer herkömmlichen Handkreissäge mit zwei Handgriffen 12, einer Antriebseinheit 14, die hier von einem Akku 16 versorgt wird, einer Auflageplatte 18 und einem Sägeblatt 20, das durch eine Aussparung der Auflageplatte 18 ragt und teilweise von einer im Folgenden näher beschriebenen oberen Schutzabdeckung 22 bogenförmig umgeben ist. Die Drehrichtung des Sägeblatts 20 ist durch einen Pfeil 23 gekennzeichnet.

Die Unterseite der Auflageplatte 18 bildet eine Werkstückauflagefläche 24, mit der die Handkreissäge 10 auf ein zu bearbeitendes Werkstück aufgelegt und an der Werkstückoberfläche entlang geführt werden kann. Die Eintauchtiefe D des Sägeblatts 20 in das Werkstück, kann optional eingestellt werden, um abhängig von der Dicke und dem Material des Werkstücks ein ideales Schnittbild zu erhalten. Gegebenenfalls kann das Sägeblatt 20 auch zur Auflageplatte 18 gekippt werden, um schräge Schnitte ausführen zu können.

Die Schutzabdeckung 22 deckt das Sägeblatt 20 im Bereich oberhalb der Auflageplatte 18 ab. Dies dient zum einen dem Schutz des Bedieners vor Verletzungen durch das Sägeblatt 20. Zum anderen wird der Bediener vor umherfliegenden Spänen, die das Sägeblatt 20 aus dem Werkstück löst, geschützt.

Die Schutzabdeckung 22 ist hier mehrteilig aufgebaut, mit einem Hauptabschnitt 26 aus einem nicht transparenten Kunststoff und einem Sichtbereich 28 aus einem transparenten Kunststoff. Das Kunststoffteil ist austauschbar am Hauptabschnitt 26 befestigt.

Der Sichtbereich 28 ist im vorderen, direkt an die Auflageplatte 18 angrenzenden Teil der Schutzabdeckung 22 angeordnet, sodass auch bei geschlossener Schutzabdeckung 22 ein freier Blick auf den Schnittpunkt des Sägeblatts 20 möglich ist, um Schnittführung und Schnittqualität kontrollieren zu können.

Der übrige Umfang der Schutzabdeckung 22 ist durch den Hauptabschnitt 26 gebildet, mit dem die Schutzabdeckung 22 auch am Gehäuse der Handkreissäge 10 befestigt ist.

Der Sichtbereich 28 könnte aber auch beispielsweise als im Hauptabschnitt 26 angeordnetes Sichtfenster ausgebildet sein.

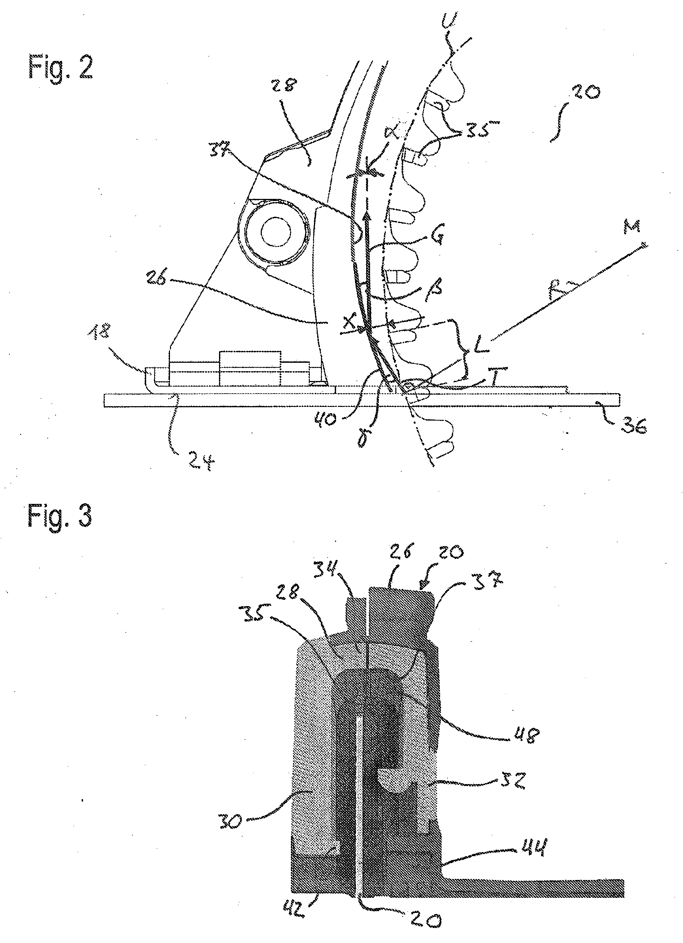

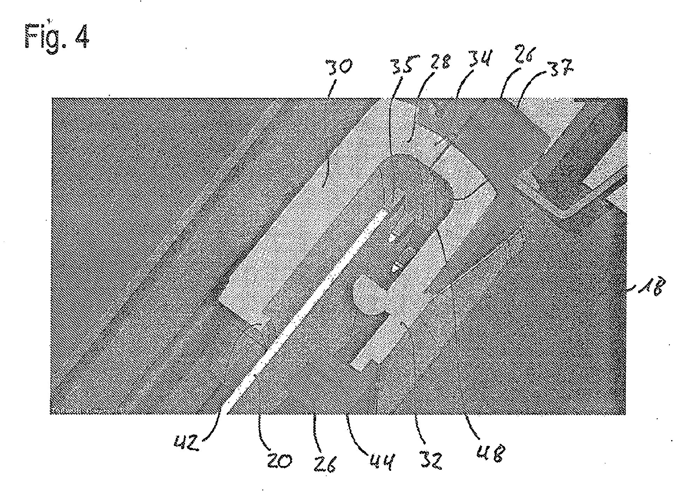

Hauptabschnitt 26 und Sichtbereich 28 sind, wie insbesondere in Figur 3 und 4 am Beispiel des Sichtbereichs 28 gezeigt ist, jeweils aus zwei parallelen Seitenwänden 30, 32 und einem Verbindungsabschnitt 34 gebildet. Die Seitenwände 30, 32 sind im wesentlichen kreisringabschnittsförmig ausgebildet, wobei der äußere Radius größer ist als der Radius des Sägeblatts 20 und der innere Radius kleiner ist als der Radius des Sägeblatts 20. Das heißt, die Seitenwände decken das Sägeblatt seitlich im Bereich der Sägezähne 35 ab. Der Verbindungsabschnitt 34 stellt die Verbindung zwischen den Seitenwänden 30, 32 dar und bildet eine radiale Abdeckung des Sägeblatts 20, die den Bediener, wie im Folgenden dargestellt, vor umherfliegenden Spänen schützt.

Wie in Figur 2 zu sehen ist, werden Späne, die vom Sägeblatt 20 aus dem Werkstück 36 ausgelöst werden, durch die Drehung des Sägeblatts 20 direkt nach Verlassen des Werkstücks 36 auf einer tangential zum Sägeblatt 20 verlaufenden Geraden (Tangente T) von diesem weggeschleudert. Die Tangente T liegt am Schnittpunkt des Sägeblattumfangs U (Umhüllende des Sägeblatts) mit der Auflagefläche 24 an. In Figur 2 sind der Mittelpunkt M des Sägeblattumfangs U und ein zum Fußpunkt der Tangente verlaufender Radius R dargestellt. Dieser Fußpunkt ist der zuvor genannte Schnittpunkt des Sägeblattumfangs U mit der Auflagefläche 24. Die Späne treffen in einem flachen Winkel γ auf die Innenseite 37 der Schutzabdeckung 22 auf und prallen von dieser ab. Der Reflexionswinkel β entspricht dabei dem Auftreffwinkel γ auf die Innenseite 37 der Schutzabdeckung 22. Die weitere Flugbahn folgt aufgrund der hohen Geschwindigkeit der Späne weiterhin im Wesentlichen längs einer Geraden G. Im Bereich, in dem die Späne auf die Innenseite 37 der Schutzabdeckung 22 auftreffen, ist hier zusätzlich eine Prallplatte 40 aus Metall vorgesehen, die eine höhere Widerstandsfähigkeit gegen die heißen Späne aufweist als der Rest der Abdeckung 22.

Bei bisher verwendeten Schutzabdeckungen 22 prallen die Späne in einem relativ steilen Winkel auf die Schutzabdeckung 22 auf. Dies hat zum einen zur Folge, dass die Schutzabdeckung 22 sehr stark beansprucht wird, was zu einer schnellen Eintrübung des Sichtbereichs 28 führt. Zum anderen werden die Späne in einem relativ steilen Winkel reflektiert, sodass diese in Richtung des Drehzentrums des Sägeblatts 20 geschleudert werden.

Die Schutzabdeckung 22 der erfindungsgemäßen Handkreissäge 10 ist so ausgebildet, dass Späne in einem relativ flachen Winkel γ auf die Schutzabdeckung 22 auftreffen. Dadurch ist der Abprallwinkel β ebenfalls geringer, sodass die Flugbahn der Späne einen Winkel α mit einer Senkrechten zur Auflageplatte 18 von maximal 30°, vorzugsweise maximal 20° einschließt. Das heißt, die Späne prallen in einem so flachen Winkel von der Innenseite 37 der Schutzabdeckung 22 ab, dass die weitere Flugbahn innerhalb der Seitenwände 30, 32 verläuft. Somit ist auch nach der Reflektion sicher ausgeschlossen, dass Späne mit hoher Geschwindigkeit aus der Schutzabdeckung 22 austreten können.

Um diesen Effekt zu verstärken, ist die Schutzabdeckung 22 im Reflexionsbereich sehr nahe an das Sägeblatt 20 herangezogen. Der kleinste Abstand X von der Schutzabdeckung 22 ist in diesem Bereich kleiner als 10 mm. Dadurch ist auch der Abstand L des Reflexionspunkts vom Werkstück 36, in dem die Sägespäne auf die Schutzabdeckung 22 auftreffen, kleiner als 20 mm, gemessen längs der Tangente T. Das heißt, die Späne treffen nur im unteren Bereich auf den Sichtbereich 28 auf, sodass der darüber liegende Bereich vor umherfliegenden Spänen und somit vor einer Eintrübung geschützt ist.

Die Prallplatte 40 ist vorzugsweise austauschbar an der Schutzabdeckung 22, insbesondere an der Innenseite des Sichtbereichs 28, befestigt, sodass bei übermäßigem Verschleiß ein Austausch der Prallplatte 40 möglich ist.

Optional sind aber auch Ausführungsformen ohne eine zusätzliche Prallplatte 40 denkbar. In einer solchen Ausführungsform prallen die Späne direkt auf die Schutzabdeckung 22 bzw. auf den Sichtbereich 28. Aufgrund des flachen Aufprallwinkels ist auch in diesem Fall der Verschleiß deutlich geringer als bei bisher verwendeten Schutzabdeckungen, sodass ein Eintrübung des Sichtbereichs verhindert oder zumindest hinausgezögert werden kann.

Um einen zusätzlichen Schutz vor umherfliegenden Spänen zu schaffen, sind, wie in Figur 3 und 4 zu sehen ist, auf der Innenseite der Seitenwände 30, 32 zusätzliche, axial in Richtung zum Sägeblatt 20 gerichtete Leisten 42, 44 angeformt. Diese Leisten 42, 44 sind radial einwärts des Sägeblatts 20 angeordnet und verlaufen konzentrisch zum Sägeblatt 20.

Durch diese Leisten 42, 44 wird der Austrittsbereich am Innenradius der Seitenwände 30, 32, in dem Späne aus der Schutzabdeckung 22 austreten können, weiter verkleinert. Die Späne sind gewissermaßen in einem konzentrisch zum Umfang des Sägeblatts 20 verlaufenden Kanal, der die Sägezähne 35 umgibt, geführt. Optional kann beispielsweise eine Absaugeinrichtung an die Schutzabdeckung angeschlossen werden, die die Späne aus diesem Kanal absaugt.

Im Bereich des Sichtbereichs 28 ist die Abdeckung, wie Figur 3 zeigt, teilweise mehrlagig ausgeführt (Prallplatte, nicht gezeigt, Sichtbereich 28 und tragender Hauptabschnitt 26).

Die Innenseite des Verbindungsabschnitts 34 verläuft bogenförmig und vorzugsweise trotz der unterschiedlichen Teile absatzlos.

## Patentansprüche

1. Kreissäge, insbesondere Handkreissäge (10), mit einer Auflageplatte (18), die an der Unterseite eine Werkstückauflagefläche (24) bildet, einem Sägeblatt (20) und einer Schutzabdeckung (22), die das Sägeblatt (20) in einem Bereich oberhalb eines zu bearbeitenden Werkstücks (36) abdeckt, wobei die Schutzabdeckung (22) eine solche Geometrie und Lage zum Sägeblatt (20) hat, dass eine Gerade (G), die durch die erste Reflexion einer am Schnittpunkt des Sägeblattumfangs mit der Werkstückauflagefläche (24) angesetzten Tangente (T) von der Schutzabdeckung (22) entsteht, mit einer Senkrechten zur Werkstückauflagefläche (24) einen Winkel (α) von bis zu 30°, insbesondere bis zu 20° einschließt, **dadurch gekennzeichnet, dass** die Innenseite (37) der Schutzabdeckung (22) im Bereich der Auflageplatte (18) einen geringsten Abstand (X) von maximal 10 mm zum Umfang des Sägeblatts (20) hat und dass die Tangente (T) in einem Abstand (L) von maximal 20 mm zum Werkstück (36) auf die Schutzabdeckung (22) auftrifft.

2. Kreissäge nach Anspruch 1, **dadurch gekennzeichnet, dass** die Schutzabdeckung (22) axial gegenüberliegende Seitenwände (30, 32) aufweist, die das Sägeblatt (20) in axialer Richtung teilweise abdecken, und dass von der Innenseite der Seitenwände (30, 32) radial einwärts des Sägeblattumfangs, axial aufeinander zu und vorzugsweise konzentrisch zum Sägeblatt (20) verlaufende Leisten (42, 44) vorstehen.

3. Kreissäge nach einem der vorhergehenden Ansprüche, **dadurch gekennzeichnet, dass** die Schutzabdeckung (22) einen Sichtbereich (28) hat, wobei der Sichtbereich (28) vorzugsweise an die Werkstückauflagefläche (24) angrenzt.

4. Kreissäge nach einem der vorhergehenden Ansprüche, **dadurch gekennzeichnet, dass** in einem an das Werkstück (36) angrenzenden Bereich die radiale Innenseite (37) der Schutzabdeckung (22) durch eine Prallplatte (40), insbesondere aus Metall, gebildet ist.

5. Kreissäge nach Anspruch 4, **dadurch gekennzeichnet, dass** die Schutzabdeckung (22) zumindest im Bereich der und/oder um die Prallplatte (40) aus einem transparenten Kunststoff besteht.

6. Kreissäge nach Anspruch 4 oder 5, **dadurch gekennzeichnet, dass** die Prallplatte (40) innenseitig am Rest der Schutzabdeckung (22) befestigt ist.

7. Kreissäge nach einem der Ansprüche 4 bis 6, **dadurch gekennzeichnet, dass** die Prallplatte (40) austauschbar befestigt ist.

8. Kreissäge nach einem der vorhergehenden Ansprüche, **dadurch gekennzeichnet, dass** die Schutzabdeckung (22) einen Hauptabschnitt (26) zur werkzeugseitigen Befestigung der Schutzabdeckung (22) aufweist, der vorzugsweise aus nicht transparentem Material ist.

9. Kreissäge nach Anspruch 8, **dadurch gekennzeichnet, dass** der Hauptabschnitt (26) Aussparungen für den Sichtbereich (28) aufweist.

## Claims

1. Circular saw, in particular a hand-held circular saw (10), having a sole plate (18) which forms, on its underside, a surface (24) for contacting workpieces, having a saw blade (20) and having a guard (22) which covers the saw blade (20) in a region above the workpiece (36) being worked on, the guard (22) being of a geometry, and being in a position relative to the saw blade (20), such that a straight line (G) which is produced by the first reflection from the guard (22) of a tangent (T) through the point at which the circumference of the saw blade intersects the surface (24) for contacting workpieces makes an angle (α) of up to 30°, and in particular of up to 20°, with a perpendicular to the surface (24) for contacting workpieces, **characterised in that** the inside face (37) of the guard (22) is at a shortest distance (X) of not more than 10 mm from the circumference of the saw blade (20) in the region of the sole plate (18) and **in that** the tangent (T) is incident on the guard (22) at a distance (L) of not more than 20 mm from the workpiece (36).

2. Circular saw according to claim 1, **characterised in that** the guard (22) has axially opposed side-walls (30, 32) which partly cover the saw blade (20) in the axial direction, and **in that**, radially inwards from the circumference of the saw blade, ridges (42, 44) which extend towards one another axially and preferably concentrically to the saw blade (20) project from the inside faces of the side-walls (30, 32).

3. Circular saw according to either of the preceding claims, **characterised in that** the guard (22) has a viewing region (28), the viewing region (28) preferably adjoining the surface (24) for contacting workpieces.

4. Circular saw according to one of the preceding claims, **characterised in that**, in a region adjoining the workpiece (36), the radial inside face (37) of the guard (22) is formed by a deflector plate (40) made, in particular, of metal.

5. Circular saw according to claim 4, **characterised in that** the guard (22) is composed of transparent plastics material, at least in the region of the deflector plate (40) and/or the region around it.

6. Circular saw according to claim 4 or 5, **characterised in that** the deflector plate (40) is fastened to the rest of the guard (22) on the inside.

7. Circular saw according to one of claims 4 to 6, **characterised in that** deflector plate (40) is fastened in place in such a way as to be replaceable.

8. Circular saw according to one of the preceding claims, **characterised in that** the guard (22) has a main portion (26), for fastening the guard (22) to the circular saw, which is preferably made of non-transparent material.

9. Circular saw according to claim 8, **characterised in that** the main portion (26) has openings for the viewing region (28).

## Revendications

1. Scie circulaire, en particulier, scie circulaire manuelle (10) comprenant un plateau support (18) qui forme une surface de dépôt pour la pièce à façonner (24) sur sa partie inférieure, une lame de scie (20) et un capot de protection (22) qui recouvre la lame de la scie (20) dans une zone au dessus d'une pièce à façonner (36), le capot de protection (22) possédant une géométrie et une position par rapport à la lame de la scie (20) telles qu'une droite (G), qui est générée par la première réflexion d'une tangente (T) du capot de protection (22) partant du point d'intersection du pourtour de la lame de la scie avec la surface de dépôt pour la pièce à façonner (24), fait avec une verticale à la surface de dépôt pour la pièce à façonner (24) un angle (α) pouvant atteindre jusqu'à 30 °, en particulier, jusqu'à 20 °, **caractérisée en ce que** la partie intérieure (37) du capot de protection (22) est à une distance minimale (X) d'au maximum 10 mm du pourtour de la lame de la scie (20) et que la tangente (T) tombe sur le capot de protection (22) à une distance (L) d'au maximum 20 mm de la pièce à façonner (36).

2. Scie circulaire selon la revendication 1 **caractérisée en ce que** le capot de protection (22) présente des parois latérales (30, 32) axiales l'une en face de l'autre qui recouvrent partiellement la lame de scie (20) dans la direction axiale et que des baguettes (42, 44), s'étendant radialement vers l'intérieur du pourtour de la lame de la scie en partant de la face interne des parois latérales (30, 32), dépassent axialement l'une par rapport à l'autre et de préférence de manière concentrique par rapport à la lame de la scie (20).

3. Scie circulaire selon l'une des revendications précédentes **caractérisée en ce que** le capot de protection (22) possède une zone de visualisation (28), la zone de visualisation (28) étant de préférence attenante à la surface de dépôt pour la pièce à façonner (24).

4. Scie circulaire selon l'une des revendications précédentes **caractérisée en ce que** la face interne (37) radiale du capot de protection (22) est formée par une plaque d'amortissement d'impact (40), en particulier, en métal, dans une zone attenante à la pièce à façonner (36).

5. Scie circulaire selon la revendication 4 **caractérisée en ce que** le capot de protection (22) est constituée au moins dans la zone de, et/ou autour, de la plaque d'amortissement d'impact (40) en une matière synthétique transparente.

6. Scie circulaire selon les revendications 4 ou 5 **caractérisée en ce que** la plaque d'amortissement d'impact (40) est fixée du côté intérieur sur le reste du capot de protection (22).

7. Scie circulaire selon l'une des revendications de 4 à 6 **caractérisée en ce que** la plaque d'amortissement d'impact (40) est fixée en étant échangeable.

8. Scie circulaire selon l'une des revendications précédentes **caractérisée en ce que** le capot de protection (22) présente une section principale (26), pour la fixation du capot de protection du côté de l'outil, qui est de préférence dans un matériau non transparent.

9. Scie circulaire selon la revendication 8 **caractérisée en ce que** la section principale (26) présente des évidements destinés à la zone de visualisation (28).
